Europäisches Patentamt

European Patent Office

Office européen des brevets

(11) Publication number: 0 195 567
A2

# EUROPEAN PATENT APPLICATION

(21) Application number: 86301636.6

(51) Int. Cl.⁴: H01M 10/18

(22) Date of filing: 07.03.86

(30) Priority: 12.03.85 FI 850983

(43) Date of publication of application:
24.09.86 Bulletin 86/39

(84) Designated Contracting States:
AT BE CH DE FR GB IT LI NL SE

(71) Applicant: NESTE OY
Keilaniemi
SF-02150 Espoo 15(FI)

(72) Inventor: Rautavuori, Jorma
Lohentie 10
SF-06150 Porvoo(FI)
Inventor: Lonnberg, Viveca
Oravanmarjapolku 14
SF-06100 Porvoo(FI)
Inventor: Gadda, Lars
Joukahaisentie 4 D
SF-06150 Porvoo(FI)
Inventor: Loponen, Markku
Wallgreninkatu 4
SF-06100 Porvoo(FI)
Inventor: Blomberg, Mats
Mannerheiminkatu 52
SF-06100 Porvoo(FI)
Inventor: Alvesalo, Tapio
Kulmakuja 3
SF-02160 Espoo(FI)
Inventor: Nieminen, Jukka-Pekka
Karakalliontie 4 D 36
SF-02620 Espoo(FI)

(74) Representative: Ruffles, Graham Keith et al
MARKS & CLERK 57-60 Lincoln's Inn Fields
London WC2A 3LS(GB)

(54) Bipolar storage battery.

(57) The present invention concerns a bipolar storage battery. The storage battery (10) consists of bipolar elements (12) in consecutive mutual contact, each element comprising a plate (13) of electrically conductive material which has been coated on one side with a positive active compound (14) and on the other side with a negative active compound (15); of separator plates (16) containing electrolyte, which separate the adjacent bipolar elements (12); and of an enclosed gas-tight housing - (11), which surrounds the bipolar elements (12) placed in consecutive contact. The edges of the bipolar element plates (13) are at least partially apart from the walls of the housing - (11) so that no continuous, sealing contact is established between the walls of the housing (11) and the plates (13).

FIG. 1

Bipolar storage battery

The present invention concerns a bipolar storage battery consisting of bipolar elements in consecutive mutual contact, each element comprising a plate of an electrically conductive material, coated on one side with a positive active compound and on the other side with a negative active compound; of separator plates containing electrolyte, these plates separating each two adjacent bipolar elements; and of an enclosed, gas-tight housing surrounding said bipolar elements which are in mutual consecutive contact.

A bipolar lead storage battery is understood to be a battery which has not merely positive and negative electrodes like a conventional lead storage battery: the bipolar electrode consists of an electrically conductive plate and of active compounds attached to the plate on both sides thereof. There is usually a positive compound on one side and a negative compound on the other side of the plate. The electrically conductive plate has to be impermeable to water, that is, the electrolytic acid must not be able to pass through it. The storage battery is composed of these bipolar electrodes in the manner that such electrodes are mounted in a number consistent with the desired battery voltage, parallel to each other and at a spacing such that a separator and the requisite electrolyte quantity can be interposed. The first and last electrodes are monopolar, that is, they contain only positive, respectively negative, active compound. The assembly of the electrode plates is carried out in such manner that in each interspace a positive and a negative compound face each other, on opposite sides. Since each cell that has been formed in this way is equivalent to 2 volts voltage, a 12-volt storage battery for instance requires six such cells in series, i.e., five bipolar electrodes and on either end one monopolar electrode.

Since the electrically conductive plate must be impermeable to the electrolyte, there must also be no communication around the edges of the plate between the electrolytes of adjacent cells. In conventional bipolar constructions this requirement has been met in that the conductive plate has all over its margin been fixed with liquid-tight sealing to the wall of the housing. This attachment is usually accomplished by fusing together the plastic housing and the edge of the conductive plate, as is disclosed e.g. in the U.S. Patents No. 3,728,158, 3,795,543, 4,098,967, 4,164,068 and 4,275,130.

The conductive plate is frequently a plastic composite in which electrical conductivity has been achieved by means of a conductive additive. The adherence between such materials and the active compound, and therefore also the electrical contact, is not particularly good; in addition, any compound that has fallen off the plates will naturally reduce the capacity of the storage battery, and it may cause a short circuit on the bottom of the battery. Instability of the conductive additive in the conditions prevailing in the storage battery may also be a problem. It has therefore been suggested to add on the surface of the plates, for instance, a lead film (U.S. Patent No. 4,098,967) or lead/Teflon or polyethylene films (U.S. Patent No. 4,275,130) in order to eliminate these problems.

Existing bipolar storage batteries present numerous drawbacks. If it is desired to increase the capacity of a single storage battery, this implies that the size of the electrolyte plate is increased. Application of the active compound has to be performed prior to assembling the battery, and a large-sized plate will be heavy and difficult to handle in the sealing step (that is, the compounds may flake off). Moreover, vertically positioned heavy elec trodes impose a load on the sealed joints, which may come unsealed. If, again, the capacity is increased by connecting a plurality of storage batteries in parallel, the number of cells requiring topping up with water becomes very high. For instance, ten 12-volt 6-Ah storage batteries in parallel require 60 separate cells, each with a filling plug.

The margins of the electrode plates must either be protected against contamination during application of the compounds, or they must be cleaned prior to sealing, and this causes extra costs. If a leak remains in the seal, it is usually impossible to repair afterwards, and such a battery will be unfit for use.

Pressing, which would improve the adherence of the active compound, is difficult to implement if the plates have been affixed to the housing over their entire length. Therefore one is usually compelled to use complicated electrode plates.

The present invention concerns a bipolar lead storage battery which is free of the aforementioned drawbacks. Thus, the object of the invention is a bipolar lead storage battery which is simple of its construction and in which the above-mentioned difficulties of sealing the electrode plates agains the battery housing are not encountered. Another object of the invention is a bipolar lead storage battery in which there is no need to add water or acid to the battery during its service life and, as a consequence, no water filling plugs are needed. Also an object of the invention is a bipolar lead storage battery in which during the time when it is charged no hydrogen gas accumulating in the cells is produced, which would require plugs that have to be kept open during the charging process. Still one object of the invention is a bipolar lead storage battery having a construction which admits compression of the electrode plates with ease, whereby the service life of the battery is prolonged. Still one object of the invention is a bipolar lead storage battery affording the possibility to achieve higher voltages simply by stacking more electrode plates on top of each other.

The objectives mentioned above are achieved in the bipolar lead storage battery of the invention, which is characterized in that the edges of the bipolar element plates are, in part at least, out of contact with the walls of the housing so that no continuous, sealing or electrically conductive contact is established between the walls of the housing and the plates.

In the storage battery of the invention, the electrolyte is contained in the separator plates between the bipolar elements and in the active compounds, whereby there occurs, normally, no freely flowing electrolyte at all in the battery. As a consequence, no short circuits either occur between different elements by mediation of the electrolyte acid. According to an embodiment of the invention, the conductive plates have been covered with active compound in such manner that the margins of the plates remain free of compound. This, for its part, also acts in the direction that no short circuits will occur between the plates.

Since in the bipolar storage battery of the invention the bipolar element plates are not in continuous sealing contact with the walls surrounding the plates, there will also occur no sealing problems, which are present in conventional bipolar storage batteries. At the same time, it is easy to arrange for pressing the bipolar plates together, since the plates are not fixed to the walls of the housing.

The bipolar elements are advantageously horizontal in the bipolar storage battery of the invention. This contributes to holding the electrolyte provided in the separator plates inside the separator plates and counteracts its tendency to run out. Horizontal position is also advantageous in the respect that the plates require no particular support: they support each other. The size of the plates may vary within a considerable range without any problems being introduced hereby. In an advantageous embodiment of the invention there are used, in conjunction with the separator plates, materials increasing the rigidity and permanence of shape, whereby for instance the compression increasing the life span of the battery may be increased without causing the plates to be deformed by compression.

The bipolar element plates may also be vertically or obliquely positioned in the storage battery of the invention without any detriment being hereby caused to the operation of the battery. It is equally possible to suspend the plates by their upper parts in the housing so that a space remains between the lower edge of the plates and the bottom of the housing. Hereby no short circuits are incurred by effect of loose electrolyte acid on the bottom, if any.

It is a significant advantage of the bipolar storage battery of the invention that no water need be added to the battery. During the charging process, the oxygen liberated on the positive electrode can pass through the separator plate to the adjacent negative electrode, where it is bound and prevents the generation of hydrogen. It is merely necessary to take care that the outer shell of the storage battery is gas-tight. Naturally, the housing has to be provided with at least one pressure relief valve which lets escape the abnormal gas pressure, if any, produced as a consequence of overcharging.

The plates of electrically conductive material are advantageously made either of lead or of electrically conductive plastic or composite plastic. The separator plates between the plates are advantageously made of glass fibres, a material strong enough to tolerate the stresses which arise and having adequate adhesion for retaining the electrolyte acid.

The invention is now described in greater detail, referring to an advantageous embodiment of the bipolar storage battery of the invention, presented in the figures of the attached drawing, to which the invention is not meant to be exclusively confined.

Fig. 1 displays the construction principle of the storage battery of the invention in vertical section.

Fig. 2 shows the section along the line II-II in Fig. 1.

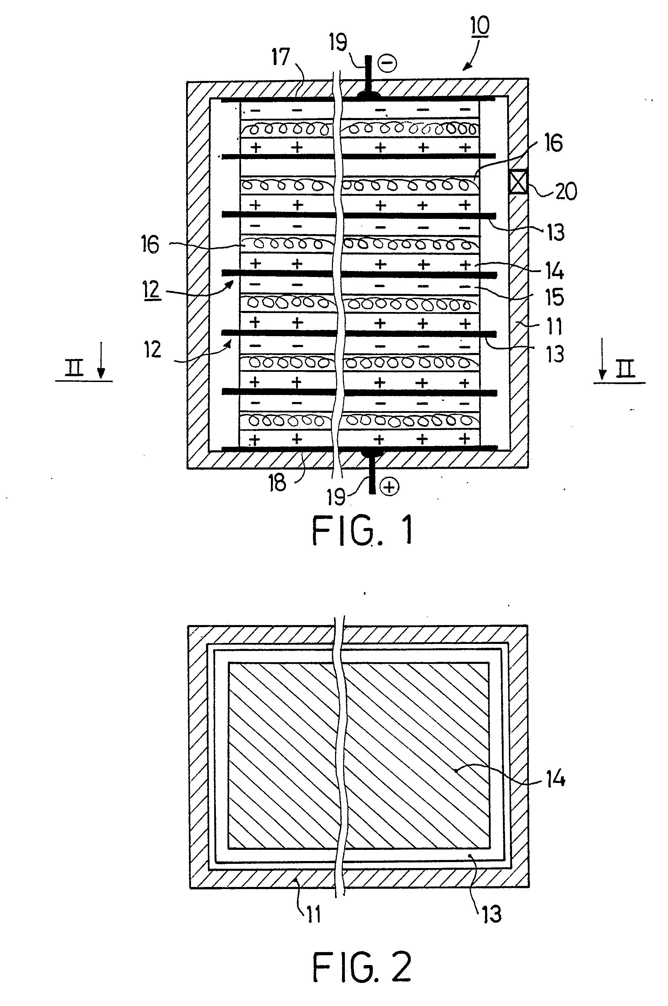

In Fig. 1 has been depicted the construction principle of a 12-volt storage battery. The bipolar elements 12 consist of an electrically conductive plate 13 coated on one side with positive active compound 14 and on the other side with negative active compound 15. Between the bipolar elements 12 are disposed separator plates 16 which separate the active compounds with different signs on the surfaces of adjacent plates 13.

The separator plates 16 have a porous structure and they contain part of the electrolyte acid necessary for the operation of the storage battery 10. Part of the acid is, of course, contained in the active compounds 14 and 15.

On the ends of the bipolar element stacks have been provided end plates 17 and 18 which have been coated with active compound on one side only. Lead wires or bus bars 19 for picking up electric current have been attached to the end plates 17 and 18.

The bipolar element stack has been placed in an enclosed, gas-tight housing 11, which has been fitted with at least one pressure relief valve 20, this valve preventing the housing 11 of the storage battery 10 from suffering damage because of gas generation resulting from excessively vigorous charging or discharging.

In the figure, the bipolar elements 12 have been depicted as having a surface area clearly smaller than the cross section area of the housing 11. It is also conceivable that the area and shape of the plates 13 are closely consistent with the interior cross section of the housing 11, in which case the bipolar elements 12 are lent lateral support by the walls of the housing 11. The only thing which is important from the viewpoint of the present invention is that the edges of the plates 13 and the walls of the housing 11 have no continuous, tightly sealed contact.

## Claims

1. A bipolar storage battery consisting of bipolar elements (12) in consecutive mutual contact, each element comprising a plate (13) of electrically conductive material which has been coated on one side with a positive active compound (14) and on the other side with a negative active compound (15); of separator plates (16) containing electrolyte, which separate the adjacent bipolar elements (12); and of an enclosed gas-tight housing (11), which surrounds said bipolar elements (12) placed in consecutive contact, characterized in that the edges of the bipolar element plates (13) are at least partially apart from the walls of the housing (11) so that no continuous, sealing contact is established between the walls of the housing (11) and the plates (13).

2. Bipolar storage battery according to claim 1, characterized in that the bipolar elements (12) are horizontal.

3. Bipolar storage battery according to claim 1 or 2, characterized in that in conjunction with the separators (16) there is material adding to rigidity, whereby the elements (12) may be pressed against each other without causing the separators (16) to be compressed.

4. Bipolar storage battery according to claim 1, characterized in that the bipolar elements (12) are substantially vertical.

5. Bipolar storage battery according to claim 4, characterized in that the bipolar elements (12) are supported by their upper part.

6. Bipolar storage battery according to claim 5, characterized in that there is a sufficient space between the lower edge of the plates (13) of the bipolar elements (12) and the bottom of the housing (11).

7. Bipolar storage battery according to claim 1 or 2, characterized in that the surface area of the plate (13) covered by the active compounds (14,15) is smaller than the area of the conductive plate (13).

8. Bipolar storage battery according to any one of the preceding claims, characterized in that the plates (13) of conductive material consist of lead.

9. Bipolar storage battery according to any one of the preceding claims, characterized in that the plates (13) of conductive material consist of electrically conductive plastic or composite plastic.

FIG. 1

FIG. 2